# EUROPÄISCHE PATENTSCHRIFT

(11) **EP 4 211 518 B1**
(45) Veröffentlichungstag und Bekanntmachung des Hinweises auf die Patenterteilung: **06.08.2025**
(21) Anmeldenummer: 21759305.2
(22) Anmeldetag: 16.08.2021
(51) Int. Cl.: G05B 19/042

(54) **EIGENSICHERES FELDGERÄT DER AUTOMATISIERUNGSTECHNIK**
INTRINSICALLY SAFE AUTOMATION FIELD DEVICE
DISPOSITIF DE TERRAIN POUR AUTOMATISATION À SÉCURITÉ INTRINSÈQUE

(30) Priorität: 08.09.2020 DE 102020123409
(43) Veröffentlichungstag der Anmeldung: 19.07.2023
(73) Patentinhaber: Endress+Hauser SE+Co. KG, 79689 Maulburg (DE)
(72) Erfinder: STRÜTT, Bernd, 79585 Steinen (DE); STRITTMATTER, Christian, 79736 Rickenbach (DE); ASAL, Florian, 79677 Aitern (DE); GERWIG, Simon, 79650 Schopfheim (DE)
(74) Vertreter: Endress + Hauser Group Services (Deutschland) AG+Co. KG
(86) Internationale Anmeldenummer: PCT/EP2021/072675
(87) Internationale Veröffentlichungsnummer: WO 2022/053263

(56) Entgegenhaltungen:
- EP-B1- 2 973 919
- DE-A1- 102016 114 032

## Beschreibung

Die Erfindung bezieht sich auf ein eigensicheres Feldgerät der Automatisierungstechnik zum Einsatz in einem explosionsgefährdeten Bereich

In der Automatisierungstechnik, insbesondere in der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, usw., welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevanten Informationen liefern oder verarbeiten. Im Zusammenhang mit der Erfindung werden unter Feldgeräten also insbesondere auch Remote I/Os, Funkadapter bzw. allgemein Geräte verstanden, die auf der Feldebene angeordnet sind.

Eine Vielzahl solcher Feldgeräte wird von der Firma Endress + Hauser hergestellt und vertrieben.

Viele Feldgeräte sind als sogenannte 2-Leiter Versionen erhältlich. Hierbei erfolgt die Energieversorgung des Feldgeräts über das gleiche Leitungspaar (Zweileiterdraht) über das auch die Kommunikation erfolgt.

Insbesondere in der Prozessindustrie aber auch der Automatisierungstechnik müssen physikalische oder technische Größen durch die Feldgeräte oftmals in Bereichen gemessen bzw. ermittelt werden, in denen potentiell Explosionsgefahr besteht, sogenannte explosionsgefährdete Bereiche. Durch geeignete Maßnahmen in den Feldgeräten und Auswertesystemen (wie z. B. Spannungs- und Strombegrenzung) kann die elektrische Energie in dem zu übermittelnden Signal so begrenzt werden, dass dieses Signal unter keinen Umständen (Kurzschluss, Unterbrechungen, thermische Effekte, ...) eine Explosion auslösen kann. Hierfür sind in der IEC EN DIN 60079-ff entsprechende Schutzprinzipien festgelegt worden.

Gemäß dieser Norm sind basierend auf den anzuwendenden Zündschutzarten konstruktive und schaltungstechnische Maßnahmen für die Feldgeräte zur Verwendung in explosionsgefährdeten Bereichen definiert. Einer dieser Zündschutzarten stellen die Zündschutzart "Eigensicherheit" (Kennzeichnung Ex-i, IEC EN DIN 60079-11, veröffentlich Juni 2012) dar.

Die Zündschutzart "Eigensicherheit" basiert auf dem Prinzip der Strom- und Spannungsbegrenzung in einem Stromkreis. Die Energie des Stromkreises, die in der Lage sein könnte, eine explosionsfähige Atmosphäre zum Zünden zu bringen, wird dabei so begrenzt, dass weder durch Funken noch durch unzulässige Erwärmung der elektrischen Bauteile die Zündung der umgebenden explosionsfähigen Atmosphäre stattfinden kann.

Die Zündschutzart "Eigensicherheit" definiert dabei drei Schutzniveaus: Ex-ia, Ex-ib und Ex-ic. Dabei ist mit Niveau a das höchste Niveau definiert, bei welchem zwei zählbare Fehler in ihrer Kombination nicht zu einer Fehlfunktion führen und somit eine Zündung hervorrufen dürfen (2-Fehler-Sicherheit). Das Niveau b definiert, dass ein zählbarer Fehler nicht zu einer Fehlfunktion führen und somit eine Zündung hervorrufen dürfen (1-Fehler-Sicherheit). Bei dem Niveau c ist entsprechend keine Fehlersicherheit definiert, sodass bei einer Fehlfunktion bereits eine Zündung hervorgerufen werden kann (0-Fehler-Sicherheit).

Ein kritischer Bereich, in dem eine mögliche Zündung der umgebenden explosionsfähige Atmosphäre auftreten kann, sind die Anschlussklemmen eines Feldgerätes an denen die Zweidrahtleitung angeschlossen wird.

Für gewöhnlich wird deshalb ein Kurzschlussstrom, welcher an den Anschlussklemmen wirken kann, mithilfe einer Ex-Schutzeinheit begrenzt. Die aus dem Stand der Technik bekannten Ex-Schutzeinheiten umfassen heute zur Leistungsbegrenzung üblicherweise eine oder mehrere Z-Dioden zur Spannungsbegrenzung und in Reihe dazu einen oder mehrere Ex-Widerstände in Kombination mit einer Sicherung zur max. Strombegrenzung, wobei ferner mit zusätzlichen Dioden ein netzseitiger Rückfluss der Energie aus den Induktivitäten L und/oder den Kapazitäten C vermieden wird. Üblicherweise sind die Ex-Schutzeinheiten derartig ausgebildet, dass der eine oder die mehreren Ex-Widerstände einen Gesamtwiderstand von ca. 330 Ohm aufweist bzw. aufweisen.

Nachteil dieser Ex-Schutzeinheiten ist, dass im Normalbetrieb bei z.B. einer Klemmenspannung Uk = 24V und einem Fehlerstrom von 22mA ein Spannungsabfall von 7,26V (mit 330Ohm Widerstand) erstehen würde. Dies entspricht einer Verlustleistung am EX-Widerstand von 1/3 der zur Verfügung stehenden Gesamtleistung.

Diese Leistungseinbuße hat zur Folge, dass nur energieeffiziente Bauteile für die Geräteschaltung verwendet werden können. Ebenso wird die Entwicklung einer Feldgerätelektronik deutlich aufwändiger und damit teurer. Darüber hinaus entstehen funktionale Nachteile, wie beispielsweise Einbußen bei der Messperformance sowie bei einer optischen- oder digitalen Darstellung des Messwertes (z.B. durch ein Display oder über Bluetooth, etc.).

Aus dem Stand der Technik sind die DE 10 2016 114032 A1 und die EP 2 973 919 B1 bekannt geworden. Die DE 10 2016 114032 A1 offenbart eine eigensichere Schaltungsanordnung zur Versorgung eines Verbrauchers sowie ein System der Automatisierungstechnik, welches eine solche Schaltungsanordnung umfasst. Die EP 2 973 919 B1 offenbart ein eigensicheres Spannungsklemmgerät mit thermischer und/oder Leistungsbegrenzung.

Der Erfindung liegt somit die Aufgabe zugrunde, die zuvor beschriebenen Nachteile zu überwinden.

Die Aufgabe wird erfindungsgemäß gelöst durch das eigensichere Feldgerät der Automatisierungstechnik gemäß Patentanspruch 1.

Das erfindungsgemäß eigensichere Feldgerät der Automatisierungstechnik zum Einsatz in einem explosionsgefährdeten Bereich umfasst:
- eine erste und eine zweite Anschlussklemme zum Anschließen einer Zweidrahtleitung über die eine Strom zuführbar ist;
- ein Sensor- und/oder Aktorelement zum Erfassen und/oder Stellen einer Prozessgröße;
- eine mit der ersten und zweiten Anschlussklemme verbundene Feldgeräteelektronik, die den über die Zweidrahtleitung zuführbare Strom Is über einen Strompfad von der ersten zu der zweiten Anschlussklemme führt, wobei die Feldgeräteelektronik einen in den Strompfad eingebrachten Spannungsregler aufweist, der dazu eingerichtet ist, anhand des zugeführten Stromes Is eine Energieversorgung zumindest für das Sensor- und/oder Aktorelement bereitzustellen, wobei die Feldgeräteelektronik ferner dazu eingerichtet ist, die über das Sensorelement erfasste Prozessgröße durch Stellen des Stromes Is auf einen entsprechenden Wert zu übertragen und/oder eine durch das Aktorelement zu stellende Prozessgröße durch Auslesen des Stromes Is zu empfangen und das Aktorelement entsprechend zu stellen,
- eine Ex-Schutzeinheit umfassend zumindest ein erstes und ein zweites in Reihe in den Strompfad eingebrachtes aktiv steuerbares Schaltelement sowie zumindest eine erste und eine zweite Schwellwertschaltung, die derartig ausgebildet sind, dass die erste Schwellwertschaltung das erste steuerbare Schaltelement in Abhängigkeit eines ersten Schwellwertes des Stromes Is und die zweite Schwellwertschaltung das zweite steuerbare Schaltelement in Abhängigkeit eines zweiten Schwellwertes des Stromes Is so ansteuern, dass bei Erreichen des ersten und/oder zweiten Schwellwertes der Strom Is auf den ersten und/oder zweiten Schwellwert begrenzt wird und wobei die Schwellwertschaltungen parallel zu dem in den Strompfad eingebrachten Spannungsregler geschaltet sind.

Erfindungsgemäß werden anstelle des ohmschen Ex-Widerstandes bzw. der ohmschen Ex-Widerstände in der Ex-Schutzeinheit aktiv steuerbare Schaltelemente als Strombegrenzung in den Strompfad eingebracht, die jeweils über eine Schwellwertschaltung angesteuert werden.

Eine vorteilhafte Ausgestaltung des erfindungsgemäßen Feldgerätes sieht vor, dass die Ex-Schutzeinheit ferner ein drittes in Reihe zu dem ersten und zweiten Schaltelement in den Strompfad eingebrachtes aktiv steuerbares Schaltelement sowie eine dritte Schwellwertschaltung, die derartig ausgebildet ist, dass die dritte Schwellwertschaltung in Abhängigkeit eines dritten Schwellwertes des Stromes Is das dritte steuerbare Schaltelement ansteuert, wobei die Schwellwertschaltungen so ausgebildet sind, dass bei Erreichen des ersten, zweiten und/oder dritten Schwellwertes der Strom Is auf den ersten, zweiten und/oder dritten Schwellwert begrenzt wird und wobei die dritte Schwellwertschaltungen auch parallel zu dem in den Strompfad eingebrachten Spannungsregler geschaltet ist.

Eine weitere vorteilhafte Ausgestaltung des erfindungsgemäßen Feldgerätes sieht vor, dass der erste, zweite und/oder dritte Schwellwert des Stromes Is größer 22 mA ist, insbesondere im Bereich von 32-40 mA liegt.

Eine weitere vorteilhafte Ausgestaltung des erfindungsgemäßen Feldgerätes sieht vor, dass die erste, zweite und/oder dritte Schwellwertschaltung derartig ausgebildet sind, dass zumindest zwei der drei, vorzugsweise alle, Schwellwerte im Wesentlichen gleich sind.

Eine alternative Ausgestaltung des erfindungsgemäßen Feldgerätes sieht vor, dass die erste, zweite und/oder dritte Schwellwertschaltung derartig ausgebildet ist bzw. sind, dass zumindest zwei der drei Schwellwerte des Stromes Is unterschiedlich voneinander sind.

Eine weitere vorteilhafte Ausgestaltung des erfindungsgemäßen Feldgerätes sieht vor, dass die aktiv steuerbaren Schaltelemente ein Halbleiterschaltelement oder ein Transistor aufweisen. Der Einsatz von Halbleiterschaltelemente, bspw. in Form von Feldeffekttransistoren (MOSFETs), haben den Vorteil, dass sie im Normalbetrieb einen recht kleinen Spannungsabfall von < 1V erzeugen. Somit ist auch der Leistungsabfall recht klein (<5%).

Eine weitere vorteilhafte Ausgestaltung des erfindungsgemäßen Feldgerätes sieht vor, dass die Schwellwertschaltungen jeweils zumindest zwei Transistoren umfassen.

Eine weitere vorteilhafte Ausgestaltung des erfindungsgemäßen Feldgerätes sieht vor, dass die Feldgerätelektronik ferner einen Shuntwiderstand aufweist, der in Reihe zu dem Spannungsregler in den Strompfad eingebracht ist und die Feldgeräteelektronik ferner dazu eingerichtet ist, über den Shuntwiderstand den Strom Is zurückzulesen und wobei die erste, zweite und/oder dritte Schwellwertschaltung das Erreichen des ersten, zweiten und/oder dritten Schwellwertes des Stroms Is durch zumindest einen Spannungsabgriff über dem Shuntwiderstand realisiert bzw. realisieren. Insbesondere kann die Ausgestaltung vorsehen, dass zumindest eine, vorzugsweise alle der Schwellwertschaltungen jeweils zumindest zwei Transistoren umfassen, und die zumindest zwei Transistoren jeweils derartig miteinander und dem jeweiligen aktiv steuerbaren Schaltelement sowie dem Shuntwiderstand verbunden sind, dass die jeweilige Schaltschwelle im Wesentlichen durch den Shuntwiderstand bestimmt ist.

Eine weitere vorteilhafte Ausgestaltung des erfindungsgemäßen Feldgerätes sieht vor, dass zumindest eine, vorzugsweise alle der Schwellwertschaltungen jeweils wenigstens einen Komparator, einen Transistor und einen Spannungsteiler umfassen, die derartig miteinander und dem jeweiligen aktiv steuerbaren Schaltelement verbunden sind, dass die jeweilige Schaltschwelle im Wesentlichen durch den Spannungsteiler bestimmt ist.

Die Erfindung wird anhand der nachfolgenden Zeichnungen näher erläutert. Es zeigt:
Fig. 1: eine schematische Darstellung eines Feldgerätes, welches über eine Zweidrahtleitung zur Signal- und Energieübertragung an eine übergeordnete Einheit angeschlossen ist,
Fig. 2: eine erfindungsgemäß ausgebildete erste Variante einer Ex-Schutzeinheit im Detail,
Fig. 3: eine erfindungsgemäß ausgebildete zweite Variante einer Ex-Schutzeinheit im Detail, und
Fig. 4a - 4c: Schaltungssimulationen der Ex-Schutzeinheit.

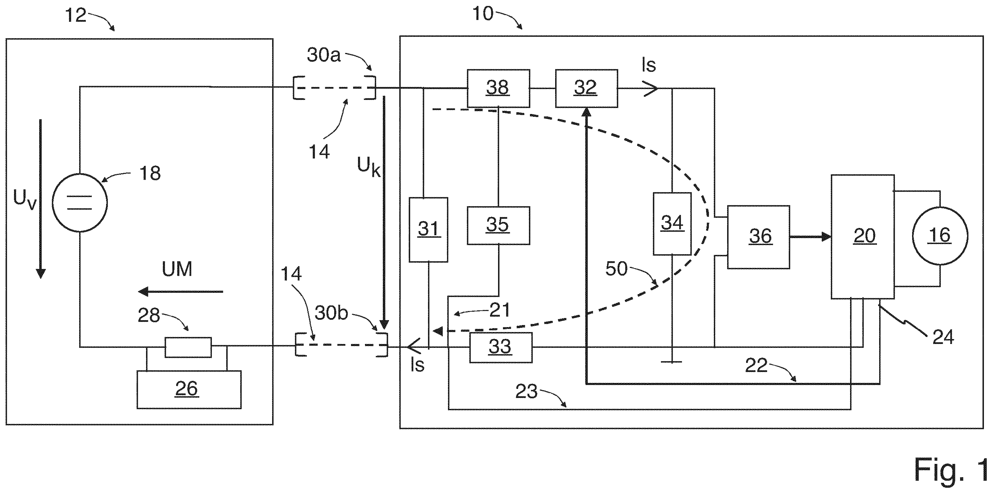

Figur 1 zeigt eine schematische Darstellung eines Feldgerätes 10, welches über erste und zweite Anschlussklemme 30a und 30b an eine Zweidrahtleitung 14 zur Signal- und Energieübertragung angeschlossen ist. Die Zweidrahtleitung 14 ist wiederum an dem anderen Ende an eine übergeordnete Einheit 12 angeschlossen. Das Feldgerät 10 ist bei dem dargestellten Beispiel eine Messstelle, in der mit Hilfe eines Sensors 16 ein Messwert bzw. Prozessgröße (beispielsweise Temperatur, Druck, Feuchtigkeit, Füllstand, Durchfluss) erfasst wird. Genauso gut könnte das Feldgerät aber auch eine Aktorstelle sein, in der mit Hilfe eines Aktors eine Prozessgröße gestellt wird.

Das Feldgerät 10 enthält keine eigene Energiequelle, sondern bezieht den für ihren Betrieb erforderlichen Versorgungsstrom über die Zweidrahtleitung 14. Dieser kann beispielsweise von einer in der übergeordneten Einheit 12 enthaltenen Spannungsquelle 18 bereitgestellt werden. Über die gleiche Zweidrahtleitung 14 wird ein jeweils den gerade gemessenen Messwert darstellendes Messwertsignal von dem Feldgerät 10 zur übergeordneten Einheit 12 übertragen. Einer üblichen Technik entsprechend ist das Messwertsignal ein über die Zweidrahtleitung 14 fließender Signalstrom Is der sich zwischen zwei vorgegebenen Werten (üblicherweise den Stromwerten 4 mA und 20 mA) ändern kann. Die Spannungsquelle 18 liefert eine Gleichspannung Uv, und der Messstrom Is ist ein Gleichstrom.

Zur Messwerterfassung enthält das Feldgerät 10 den bereits erwähnten Sensor 16 und eine mit ihm verbundene Messwandlerschaltung 20, die über ein Steuerleitung 22 eine steuerbare Stromquelle derartig ansteuert, dass der Messstrom Is auf einen den erfassten Messwert repräsentierenden Wert (Signalstrom) gestellt wird.

Die übergeordnete Einheit 12 enthält eine Auswertungsschaltung 26, die aus dem über die Zweidrahtleitung 14 übertragenen Signalstrom Is die Messwertinformation gewinnt. Zu diesem Zweck ist in die Zweidrahtleitung ein Messwiderstand 28 eingefügt, an dem eine Spannung UM entsteht, die dem über die Zweidrahtleitung übertragenen Signalstrom Is proportional ist und die der Auswertungsschaltung 26 zugeführt wird.

Der Signalstrom Is wird in dem Feldgerät 10 mittels einer internen Feldgerätelektronik durch einen Strompfad 50 von der ersten zu der zweiten Anschlussklemme 30a, 30b geführt. Über eine in den Strompfad 50 eingebrachte steuerbare Stromregelung bzw. Stromsenke 32 kann der Strom Is eingestellt werden. Die Stromregelung wird durch ein von der Messwandlerschaltung 20 am Ausgang abgegebenes Signal, welches über die Steuerleitung 22 als Steuersignal der Stromregelegung 32 zugeführt ist, entsprechend angesteuert. Abhängig vom jeweils erfassten Messwert wird somit der in der Zweidrahtleitung fließende Signalstrom Is durch eine entsprechende Steuerung der Stromregelung bzw. Stromsenke 32 gestellt. Die Stromregelung bzw. Stromsenke kann beispielsweise einen Transistor umfassen, der über das Steuersignal von der Messwandlerschaltung 20 geregelt wird. In dem Fall, dass das Feldgerät als Aktor ausgebildet ist, d.h. statt einem Sensorelement ein Aktorelement aufweist, entfällt die Stromregelung.

Das Feldgerät umfasst ferner einen niederohmigen Shuntwiderstand 33, über den der gestellte Signalstrom Is mittels einer Rückleseleitung 23 durch die Messwandlerschaltung 20 zurückgelesen wird. Entsprechend dem Ohmschen Gesetz fällt an dem Shuntwiderstand 33 eine Spannung U_Shunt = R_Shunt · Is ab. Die Spannung U_Shunt ist somit proportional zu dem durch das Feldgerät fließenden Strom Is. Zur Regelung des zu stellenden Signalstroms Is ist die über dem Shuntwiderstand 33 abfallende Spannung der Messwandlerschaltung zugeführt. Derartige Shunt-Widerstande 33 sind zur Regelung des Stromsignals entsprechende eines durch den Sensor ermittelten Messwertes für ein Feldgerät unerlässlich und weisen typischerweise einen Widerstandswert im Bereich von 5-40 Ohm, vorzugsweise 7-30 Ohm, besonders bevorzugt im Bereich von 10-25 Ohm auf.

Wie aus Fig. 1 hervorgeht, enthält das Feldgerät 10 ferner einen Spannungsregler 36, bspw. in Form eines Schalt- oder Linearreglers, dessen Aufgabe darin besteht, eine möglichst konstante Betriebsspannung für die Messwandlerschaltung 20 und den Sensor 16 zu erzeugen. Die Eingangsspannung für den Spannungsregler 36 kann beispielsweise von einer Spannungsquelle 34 insbesondere in Form eines Kondensators bereitgestellt werden. Durch die Spannungsquelle 34 wird die Eingangsspannung bzw. Klemmspannung Uk, welche von der in der übergeordneten Einheit 12 enthaltenen Spannungsquelle 18 bereitgestellt wird, gestützt. Die Spannungsquelle 34 dient somit als "Quelle" für die daran anschließenden Schaltungsteile, insbesondere für den Spannungsregler 36.

Die Verwendung des Spannungsreglers 36 in Verbindung mit der Spannungsquelle 34 ermöglicht es, der Messwandlerschaltung 20 und dem Sensor 16 stets die höchstmögliche Leistung zur Verfügung zu stellen. Der Spannungsregler 36 sorgt dabei dafür, dass trotz einer Erhöhung seiner Eingangsspannung Ue die Betriebsspannung der Messwandlerschaltung 20 und des Sensors 16 auf einem konstanten Wert gehalten wird, so dass durch eine Erhöhung der Eingangsspannung Ue am Spannungsregler 36 eine höhere Eingangsleistung zur Verfügung steht, die somit auch eine höhere Ausgangsleistung ermöglicht.

Bei einem vom Sensor 16 erfassten Messwert, der am unteren Ende des Messwertbereichs liegt, nimmt der Signalstrom Is ebenfalls den unteren Wert des Signalstrombereichs an. Bei der üblichen 4-20 mA Technik also einen Wert von 4 mA. Entsprechend nimmt bei einem vom Sensor 16 erfassten Messwert, der am oberen Ende des Messwertbereichs liegt, der Signalstrom Is den oberen Wert des Signalstrombereichs an. Bei der üblichen 4-20 mA Technik also einen Wert von 20 mA.

Zur Spannungsbegrenzung kann eine Spannungsbegrenzungsschaltung 31 parallel zu der externen Spannungsquelle zwischen die erste und zweite Anschlussklemme geschaltet sein. Die Spannungsbegrenzungsschaltung 31 kann beispielsweise aus Z-Dioden ausgebildet sein.

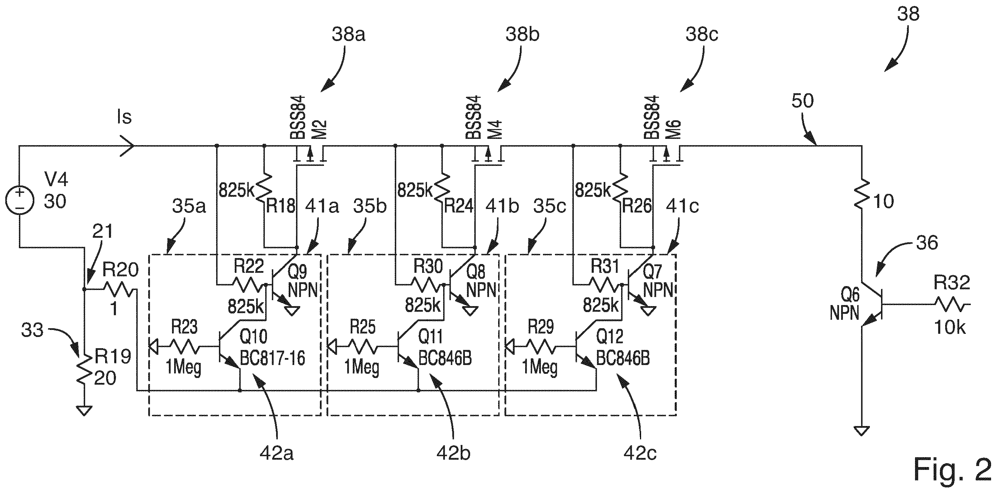

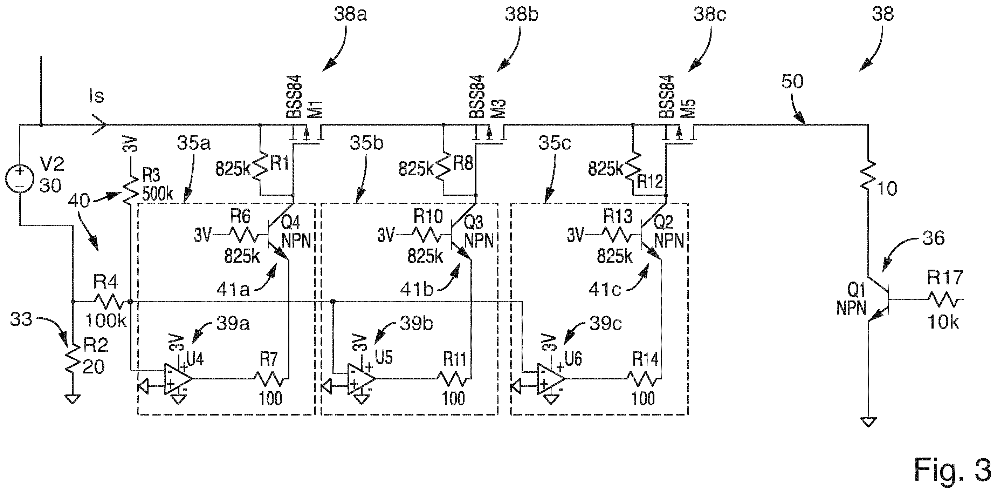

Ferner umfasst das Feldgerät eine erfindungsgemäß ausgebildete Ex-Schutzeinheit 35, 38, die zur Strombegrenzung dient. In Fig. 1 ist die Ex-Schutzeinheit nur exemplarisch angedeutet. Fig. 2 und Fig. 3 zeigen eine erste und zweite Variante einer Ex-Schutzeinheit im Detail.

Die Ex-Schutzeinheit 35, 38 umfasst zumindest ein erstes und ein zweites aktiv gesteuertes bzw. steuerbares Schaltelement 38a und 38b sowie eine erste und eine zweite Schwellwertschaltung 35a und 35b, die jeweils ein Schaltelement ansteuern. Die Ex-Schutzeinheit dient der Strombegrenzung.

Je nach gewünschten Schutzniveau und nach Vorgabe der Norm IEC EN DIN 60079-11, veröffentlich Juni 2012, kann die Ex-Schutzeinheit auch ein drittes Schaltelement 38c und eine dritte Schwellwertschaltung 35c aufweisen, wie dies beispielhaft in den Figuren 2 und 3 dargestellt ist.

Die aktiv gesteuerten bzw. steuerbaren Schaltelement 38a, 38b und 38c können beispielsweise als Halbleiterschaltelemente, wie Feldeffekttransistoren, insbesondere MOSFETs, oder als Transistoren, insbesondere Bipolartransistoren, realisiert sein.

Die Schaltungselemente 38a, 38b, 38c sind in Reihe zueinander und in Reihe zu dem Spannungsregler 36 in den Strompfad 50 eingebracht. Die Schwellwertschaltungen 35a, 35b, 35c sind dagegen parallel zu dem Spannungsregler 36, der quasi als Last dient, eingebracht.

Dies bietet in dem Fall, dass die Schaltelemente 38a, 38b, 38c als Feldeffekttransistoren ausgebildet sind, den Vorteil, dass das Vorhalten einer erforderlichen Gate-Source Spannung gegenüber konventionellen Strombegrenzungen entfallen kann. Der Hub wird hierbei über den Spannungsregler 36 als Last realisiert.

Die Schwellwertschaltungen sind grundsätzlich derartig aufgebaut, dass sie jeweils in Abhängigkeit eines Schwellwertes des in dem Strompfad 50 fließenden Stromes Is das entsprechende Schaltelement ansteuern. Die Ansteuerung erfolgt dabei derartig, dass bei Erreichen des jeweiligen Schwellwerts der in dem Strompfad 50 fließende Strom Is auf den jeweiligen Schwellwert begrenzt wird. Die Schwellwerte des Stromes Is sind größer 22 mA (Is > 22 mA) und liegen insbesondere im Bereich von 32-40 mA. Die Schwellertschaltungen 35a, 35b, 35c können nun derartig ausgebildet sein, dass sie alle denselben Schwellwert aufweisen oder alternativ, die Schwellwerte zumindest teilweise unterschiedlich sind.

Um keinen zusätzlichen Spannungsabfall und somit einen Leistungsverlust erzeugen zu müssen, kann ein zum Ermitteln des aktuellen Stromwertes benötigter Spannungsabgriff 21 über dem Shuntwiderstand 33 realisiert sein.

Im Detail können die Schwellwertschaltungen unterschiedlich ausgebildet sein. So können, wie in Fig. 2 dargestellt, die erste, zweite und dritte Schwellwertschaltung 35a, 35b, 35c jeweils aus einer Transistorschaltung mit zumindest zwei Transistoren, insb. Bipolartransistoren, ausgebildet sein. Die Transistorschaltungen 35a, 35b, 35c sind jeweils so ausgebildet, dass über eine Kollektor-Emitter Strecke des ersten Transistors 41a, 41b, 41c das jeweilige Schaltelement 38a, 38b, 38c angesteuert wird, wobei das Steuersignal über eine Kollektor-Emitter-Strecke des zweiten Transistors 42a, 42b, 42c der Basis des ersten Transistors 41a, 41b, 41c zugeführt ist. Der Spannungsabgriff am Shuntwiderstand 33 erfolgt hierbei über den Emitter des zweiten Transistors. Ggfls. kann, wie in Fig.2 hierzu ein weiterer Widerstand zwischen dem Abgriffspunkt und dem Emitter des zweiten Transistors geschaltet sein. Gemäß dieser Variante wird die jeweilige Schaltschwelle im Wesentlichen durch den Shuntwiderstand (33) bzw. den Widerstandswert des Shuntwiderstands bestimmt.

In Fig. 3 ist eine weitere Variante einer erfindungsgemäß ausgebildeten Ex-Schutzeinheit 35, 38 dargestellt. Die erste, zweite und dritte Schwellwertschaltung 35a, 35b, 35c weisen hiernach jeweils einen Komparator 39a, 39b, 39c und einen Transistor 41a, 41b, 41c auf. Ferner weist die Ex-Schutzeinheit einen Spannungsteiler 40 auf. Der Spannungsabgriff über dem Shuntwiderstand 33 erfolgt hierbei durch den Spannungsteiler. Ein Mittenabgriff des Spannungsteilers 40 ist mit den invertierenden Eingängen der Komparatoren verbunden, sodass die jeweilige Schaltschwelle im Wesentlichen durch den Spannungsteiler 40, d.h. durch das Widerstandsverhältnisses der beiden Widerstände des Spannungsteilers, bestimmt ist.

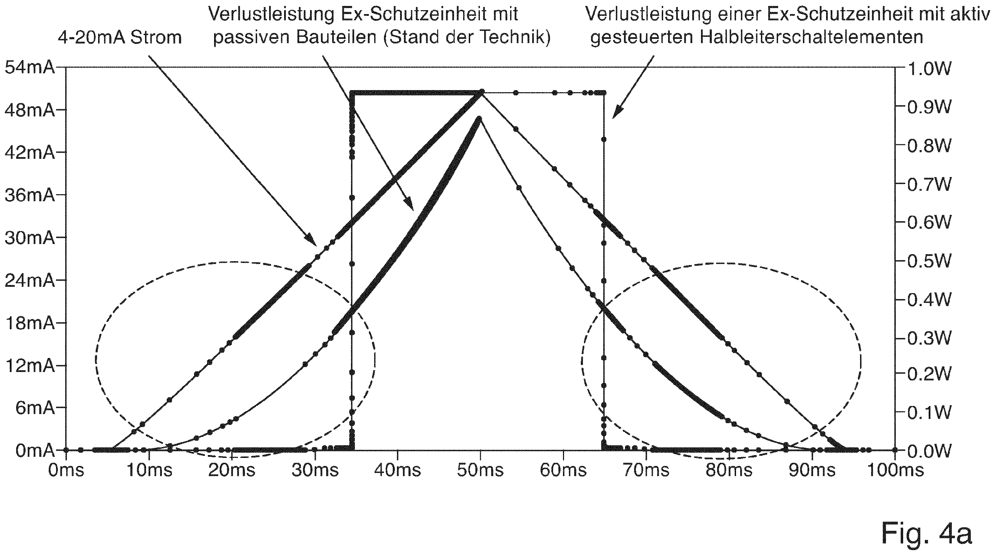

Die Fig. 4a - 4c zeigen Schaltungssimulationen der erfindungsgemäß ausgebildeten Ex-Schutzeinheit 35, 38 mit einem aktiv gesteuerten Halbleiterschaltelement im Vergleich zu einer aus dem Stand der Technik bekannten Ex-Schutzeinheit, die aus passiven Bauelementen, wie bspw. Widerständen ausgebildet ist.

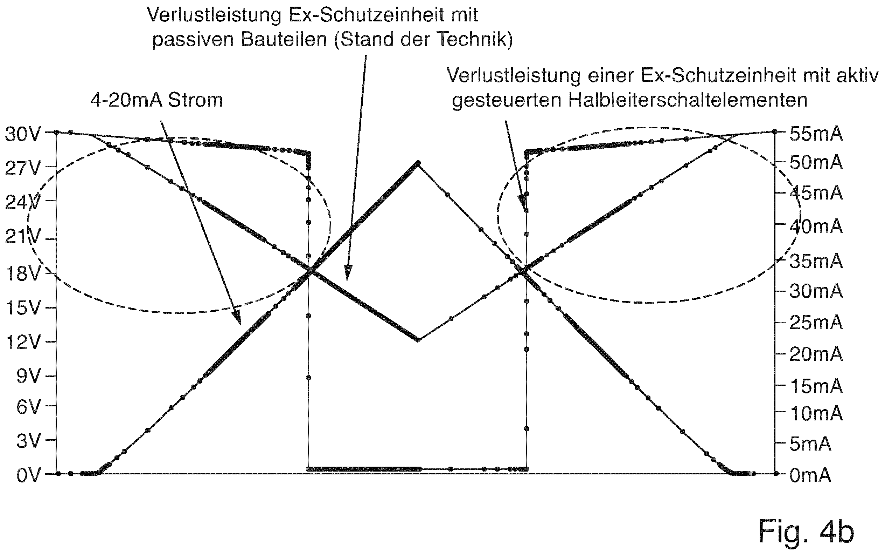

Aus den Figuren 4a und 4b wird deutlich erkennbar, dass die Ex-Schutzeinheit 35, 38 mit Halbleiterschaltelementen zur Strombegrenzung einen deutlich geringeren Spannungsabfall erzeugt und somit eine deutlich geringere Verlustleistung aufweist als die aus dem Stand der Technik bekannten Ex-Schutzeinheiten mit Widerständen bzw. passiven Bauteilen (angedeutet in Fig. 4a und 4b durch gestrichelte ovale Kreise). Dies bedeutete, dass die demzufolge deutlich mehr Energie innerhalb des Feldgerätes zur Verfügung gestellt werden kann.

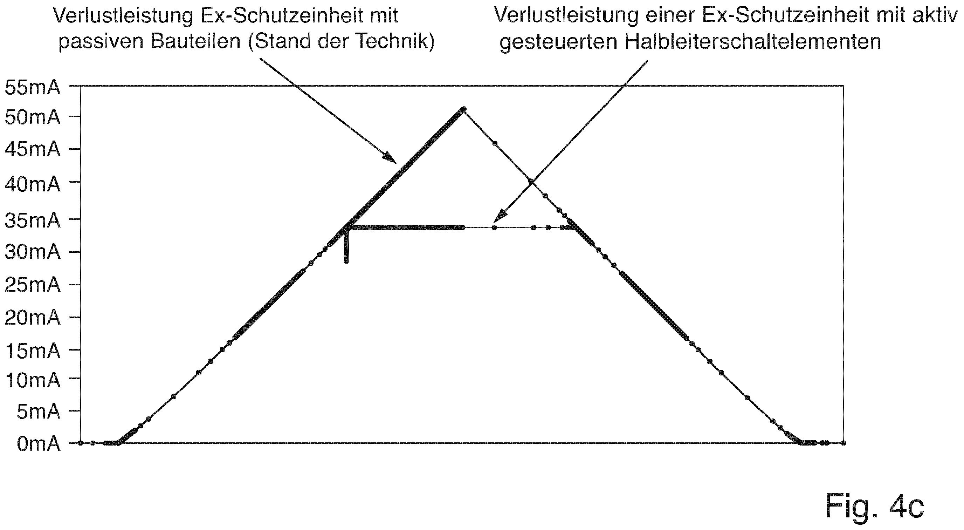

Ein weiterer Vorteil der erfindungsgemäß ausgestalteten Ex-Schutzeinheit 35, 38 ist in Fig. 4c zu erkennen, ist die wie bereits erwähnt, dass die Schaltung auf einen definierten Strom begrenzt, welches man in der Nachfolgenden Grafik sehen kann. Bei der ohmschen Begrenzung steigt der Strom bis auf >50mA an bei der Halbleiterbegrenzung auf ≤ 40mA.

### Bezugszeichenliste

- 10: Feldgerät
- 12: Übergeordnete Einheit, z.B. Steuerprogrammierbare Steuerung (SPS)
- 14: Zweidrahtleitung
- 16: Sensor
- 20: Messwandlerschaltung
- 21: Spannungsabgriff
- 22: Steuerleitung
- 23: Rückleseleitung
- 24: Ausgang der Messwandlerschaltung
- 30a, 30b: Anschlussklemmen
- 31: Spannungsbegrenzungsschaltung (Z-Diode(n))
- 32: Steuerbare Stromquelle
- 33: Shuntwiderstand
- 34: Spannungsquelle, bspw. Kondensator
- 35: Schwellwertschaltung
- 35a: Erste Schwellwertschaltung
- 35b: Zweite Schwellwertschaltung
- 35c: Dritte Schwellwertschaltung
- 36: Spannungsregler, bspw. Schaltregler oder Linearregler
- 37:
- 38: Aktives Schaltelement, insb. Halbleiterschaltelement oder Transistor
- 38a: Erstes aktives Schaltelement, insb. Halbleiterschaltelement oder Transistor
- 38b: Zweites aktives Schaltelement, insb. Halbleiterschaltelement oder Transistor
- 38c: Drittes aktives Schaltelement, insb. Halbleiterschaltelement oder Transistor
- 39a, 39b, 39c: Komparator
- 40: Spannungsteiler
- 41a, 41b,: Transistor
- 41c:
- 50: Strompfad
- Is: Messstrom
- Uk: Klemmenspannung
- U_Shunt: Spannung über dem Shuntwiderstand

## Patentansprüche

1. Eigensicheres Feldgerät der Automatisierungstechnik zum Einsatz in einem explosionsgefährdeten Bereich umfassend:
- eine erste und eine zweite Anschlussklemme (30a, 30b) zum Anschließen einer Zweidrahtleitung (14) über die eine Strom zuführbar ist;
- ein Sensor- und/oder Aktorelement (16) zum Erfassen und/oder Stellen einer Prozessgröße;
- eine mit der ersten und zweiten Anschlussklemme (30a, 30b) verbundene Feldgeräteelektronik (31, 32, 33, 34, 36), die den über die Zweidrahtleitung zuführbare Strom (Is) über einen Strompfad (50) von der ersten zu der zweiten Anschlussklemme (30a, 30b) führt, wobei die Feldgeräteelektronik (31, 32, 33, 34, 36) einen in den Strompfad (50) eingebrachten Spannungsregler (36) aufweist, der dazu eingerichtet ist, anhand des zugeführten Stromes (Is) eine Energieversorgung zumindest für das Sensor- und/oder Aktorelement (16) bereitzustellen, wobei die Feldgeräteelektronik (31, 32, 33, 34, 36) ferner dazu eingerichtet ist, die über das Sensorelement (16) erfasste Prozessgröße durch Stellen des Stromes (Is) auf einen entsprechenden Wert zu übertragen und/oder eine durch das Aktorelement (16) zu stellende Prozessgröße durch Auslesen des Stromes (Is) zu empfangen und das Aktorelement (16) entsprechend zu stellen,
**dadurch gekennzeichnet, dass**
- das Feldgerät ferner eine Ex-Schutzeinheit (35, 38) aufweist, die zumindest ein erstes und ein zweites in Reihe in den Strompfad (50) eingebrachtes aktiv steuerbares Schaltelement (38a, 38b) sowie zumindest eine erste und eine zweite Schwellwertschaltung (35a, 35b) umfasst, die derartig ausgebildet sind, dass die erste Schwellwertschaltung (35a) das erste steuerbare Schaltelement (38a) in Abhängigkeit eines ersten Schwellwertes des Stromes (Is) und die zweite Schwellwertschaltung (35b) das zweite steuerbare Schaltelement (38b) in Abhängigkeit eines zweiten Schwellwertes des Stromes (Is) so ansteuern, dass bei Erreichen des ersten und/oder zweiten Schwellwertes der Strom (Is) auf den ersten und/oder zweiten Schwellwert begrenzt wird und wobei die Schwellwertschaltungen (35a, 35b) parallel zu dem in den Strompfad (50) eingebrachten Spannungsregler (36) geschaltet sind.

2. Eigensicheres Feldgerät der Automatisierungstechnik nach Anspruch 1, wobei die Ex-Schutzeinheit (35, 38) ferner ein drittes in Reihe zu dem ersten und zweiten Schaltelement (38a, 38b) in den Strompfad (50) eingebrachtes aktiv steuerbares Schaltelement (38c) sowie eine dritte Schwellwertschaltung (35c), die derartig ausgebildet ist, dass die dritte Schwellwertschaltung (35c) in Abhängigkeit eines dritten Schwellwertes des Stromes (Is) das dritte steuerbare Schaltelement (38c) ansteuert, wobei die Schwellwertschaltungen (35a, 35b, 35c) so ausgebildet sind, dass bei Erreichen des ersten, zweiten und/oder dritten Schwellwertes der Strom (Is) auf den ersten, zweiten und/oder dritten Schwellwert begrenzt wird und wobei die dritte Schwellwertschaltungen (35a, 35b) auch parallel zu dem in den Strompfad (50) eingebrachten Spannungsregler (36) geschaltet ist.

3. Eigensicheres Feldgerät der Automatisierungstechnik nach Anspruch 1 oder 2, wobei der erste, zweite und/oder dritte Schwellwert des Stromes (Is) größer 22 mA ist, insbesondere im Bereich von 32-40 mA liegt.

4. Eigensicheres Feldgerät der der Automatisierungstechnik nach einem oder mehreren der vorhergehenden Ansprüche, wobei die erste, zweite und/oder dritte Schwellwertschaltung derartig ausgebildet sind, dass zumindest zwei der drei, vorzugsweise alle, Schwellwerte im Wesentlichen gleich sind.

5. Eigensicheres Feldgerät der der Automatisierungstechnik nach einem der Ansprüche 1 bis 3, wobei die erste, zweite und/oder dritte Schwellwertschaltung derartig ausgebildet ist bzw. sind, dass zumindest zwei der drei Schwellwerte des Stromes (Is) unterschiedlich voneinander sind.

6. Eigensicheres Feldgerät der der Automatisierungstechnik nach einem oder mehreren der vorhergehenden Ansprüche, wobei die aktiv steuerbaren Schaltelemente (38a, 38b, 38c) ein Halbleiterschaltelement oder ein Transistor aufweisen.

7. Eigensicheres Feldgerät der der Automatisierungstechnik nach einem oder mehreren der vorhergehenden Ansprüche, wobei die Schwellwertschaltungen (35a, 35b, 35c) jeweils zumindest zwei Transistoren umfassen.

8. Eigensicheres Feldgerät der Automatisierungstechnik nach einem oder mehreren der vorhergehenden Ansprüche, wobei die Feldgerätelektronik ferner einen Shuntwiderstand (33) aufweist, der in Reihe zu dem Spannungsregler (36) in den Strompfad (50) eingebracht ist und die Feldgeräteelektronik (31, 32, 33, 34, 36) ferner dazu eingerichtet ist, über den Shuntwiderstand (33) den Strom (Is) zurückzulesen und wobei die erste, zweite und/oder dritte Schwellwertschaltung (35a, 35b) das Erreichen des ersten, zweiten und/oder dritten Schwellwertes des Stroms (Is) durch zumindest einen Spannungsabgriff über dem Shuntwiderstand (33) realisiert bzw. realisieren.

9. Eigensicheres Feldgerät der Automatisierungstechnik nach zumindest dem vorhergehenden Anspruch, wobei zumindest eine, vorzugsweise alle der Schwellwertschaltungen jeweils zumindest zwei Transistoren umfassen, und die zumindest zwei Transistoren jeweils derartig miteinander und dem jeweiligen aktiv steuerbaren Schaltelement (38a, 38b, 38c) sowie dem Shuntwiderstand (33) verbunden sind, dass die jeweilige Schaltschwelle im Wesentlichen durch den Shuntwiderstand (33) bestimmt ist.

10. Eigensicheres Feldgerät der Automatisierungstechnik nach zumindest einem der vorhergehenden Ansprüche, wobei zumindest eine, vorzugsweise alle der Schwellwertschaltungen (35a, 35b, 35c) jeweils wenigstens einen Komparator (39a, 39b, 39c), einen Transistor und einen Spannungsteiler (40) umfassen, die derartig miteinander und dem jeweiligen aktiv steuerbaren Schaltelement (38a, 38b, 38c) verbunden sind, dass die jeweilige Schaltschwelle im Wesentlichen durch den Spannungsteiler (40) bestimmt ist.

## Claims

1. An intrinsically safe automation technology field device for use in a potentially explosive atmosphere, comprising:
- A first and a second connection terminal (30a, 30b) for connecting a two-wire cable (14) via which current can be supplied;
- A sensor and/or actuator element (16) for detecting and/or supplying a process variable;
- Field device electronics (31, 32, 33, 34, 36) connected to the first and second connection terminals (30a, 30b) that conduct the current (Is) which can be supplied via the two-wire cable via a current path (50) from the first to the second connection terminals (30a, 30b), wherein the field device electronics (31, 32, 33, 34, 36) have a voltage regulator (36) inserted into the current path (50), which is configured to provide an energy supply at least to the sensor and/or actuator element (16) using the supplied current (Is), wherein the field device electronics (31, 32, 33, 34, 36) are further configured to transmit the process variable detected by the sensor element (16) by setting the current (Is) to a corresponding value and/or to receive a process variable to be provided by the actuator element (16) by reading out the current (Is), and to set the actuator element (16) accordingly,
**characterized in that**
- the field device further has an Ex protection unit (35, 38), which comprises at least a first and a second actively controllable switching element (38a, 38b) inserted into the current path (50) in series, and at least a first and a second threshold value circuit (35a, 35b), which are configured in such a way that the first threshold value circuit (35a) actuates the first controllable switching element (38a) as a function of a first threshold value for current (Is) and the second threshold value circuit (35b) actuates the second controllable switching element (38b) as a function of a second threshold value for current (Is) so that the current (Is) is limited to the first and/or second threshold value(s) when the first and/or second threshold value(s) is/are reached, and wherein the threshold value circuits (35a, 35b) are switched in parallel to the voltage regulator (36) inserted into the current path (50).

2. The intrinsically safe automation technology field device as claimed in claim 1, wherein the Ex protection unit (35, 38) further comprises a third actively controllable switching element (38c) inserted into the current path (50) in series with the first and second switching elements (38a, 38b) and a third threshold value circuit (35c), which is configured in such a way that the third threshold value circuit (35c) actuates the third controllable switching element (38c) as a function of a third threshold value for current (Is), wherein the threshold value circuits (35a, 35b, 35c) are configured in such a way that the current (Is) is limited to the first, second, and/or third threshold value(s) when the first, second, and/or third threshold value(s) is/are reached, and wherein the third threshold value circuits (35a, 35b) are also switched in parallel to the voltage regulator (36) inserted into the current path (50).

3. The intrinsically safe automation technology field device as claimed in claim 1 or 2, wherein the first, second, and/or third threshold value(s) for current (Is) is/are greater than 22 mA, in particular is/are in a range between 32 and 40 mA.

4. The intrinsically safe automation technology field device as claimed in one or more of the preceding claims, wherein the first, second, and/or third threshold value circuit(s) is/are configured in such a way that at least two of the three threshold values, preferably all of them, are mostly identical.

5. The intrinsically safe automation technology field device as claimed in one of claims 1 to 3, wherein the first, second, and/or third threshold value circuit(s) is/are configured in such a way that at least two of the three threshold values for current (Is) are different from each other.

6. The intrinsically safe automation technology field device as claimed in one or more of the preceding claims, wherein the actively controllable switching elements (38a, 38b, 38c) have a semiconductor switching element or a transistor.

7. The intrinsically safe automation technology field device as claimed in one or more of the preceding claims, wherein the threshold value circuits (35a, 35b, 35c) each comprise at least two transistors.

8. The intrinsically safe automation technology field device as claimed in one or more of the preceding claims, wherein the field device electronics further have a shunt resistor (33), which is inserted into the current path (50) in series with the voltage regulator (36), and wherein the field device electronics (31, 32, 33, 34, 36) are further configured to read the current (Is) back via the shunt resistor (33), and wherein the first, second, and/or third threshold value circuit(s) (35a, 35b) reach(es) the first, second, and/or third threshold value(s) for current (Is) through at least one voltage tapping operation via the shunt resistor (33).

9. The intrinsically safe automation technology field device as claimed in at least the preceding claim, wherein at least one of the threshold value circuits, preferably all of them, comprises in each case at least two transistors, and wherein the at least two transistors are in each case connected together and connected to the respective actively controllable switching element (38a, 38b, 38c) and to the shunt resistor (33) in such a way that the respective switching threshold is mainly determined by the shunt resistor (33).

10. The intrinsically safe automation technology field device as claimed in at least one of the preceding claims, wherein at least one of the threshold value circuits (35a, 35b, 35c), preferably all of them, comprises in each case at least one comparator (39a, 39b, 39c), one transistor, and one voltage divider (40), which are connected to each other and to the respective actively controllable switching element (38a, 38b, 38c) in such a way that the respective switching threshold is mainly determined by the voltage divider (40).

## Revendications

1. Appareil de terrain à sécurité intrinsèque de la technique d'automatisation, lequel appareil est destiné à être utilisé dans une zone explosible, lequel appareil comprend :
- une première et une deuxième borne de raccordement (30a, 30b) pour le raccordement d'une ligne 2 fils (14) par l'intermédiaire de laquelle un courant peut être amené ;
- un élément capteur et/ou un élément actionneur (16) destiné(s) à la mesure et/ou au réglage d'une grandeur process ;
- une électronique d'appareil de terrain (31, 32, 33, 34, 36) reliée à la première et à la deuxième borne de raccordement (30a, 30b), laquelle électronique conduit le courant (Is) pouvant être amené par la ligne 2 fils par un trajet de courant (50) de la première à la deuxième borne de raccordement (30a, 30b), l'électronique d'appareil de terrain (31, 32, 33, 34, 36) présentant un régulateur de tension (36) introduit dans le trajet de courant (50), lequel régulateur est conçu, à l'aide du courant (Is) amené, pour mettre à disposition une alimentation en énergie au moins pour l'élément capteur et/ou l'élément actionneur (16), l'électronique d'appareil de terrain (31, 32, 33, 34, 36) étant en outre conçue pour transmettre la grandeur process mesurée par l'élément capteur (16) à une valeur correspondante en réglant le courant (Is) et/ou pour recevoir une grandeur process à régler par l'élément actionneur (16) en lisant le courant (Is) et pour régler l'élément actionneur (16) en conséquence,
**caractérisé en ce que**
l'appareil de terrain comporte en outre une unité de protection antidéflagrante (35, 38), laquelle comprend au moins un premier et un deuxième élément de commutation (38a, 38b) contrôlable activement, lesquels éléments sont introduits en série dans le trajet de courant (50), ainsi qu'au moins un premier et un deuxième circuit de seuil (35a, 35b), lesquels sont conçus afin que le premier circuit de seuil (35a) commande le premier élément de commutation (38a) contrôlable en fonction d'un premier seuil du courant (Is) et le deuxième circuit de seuil (35b) commande le deuxième élément de commutation (38b) contrôlable en fonction d'un deuxième seuil du courant (Is), de telle sorte qu'en cas d'atteinte du premier et/ou du deuxième seuil, le courant (Is) est limité au premier et/ou au deuxième seuil, et les circuits de seuil (35a, 35b) étant montés en parallèle avec le régulateur de tension (36) introduit dans le trajet de courant (50).

2. Appareil de terrain à sécurité intrinsèque de la technique d'automatisation selon la revendication 1, pour lequel l'unité de protection antidéflagrante (35, 38) comprend en outre un troisième élément de commutation (38c) contrôlable activement, lequel est introduit dans le trajet de courant (50) en série avec le premier et le deuxième élément de commutation (38a, 38b), ainsi qu'un troisième circuit de seuil (35c), lequel est conçu de telle sorte que le troisième circuit de seuil (35c) commande le troisième élément de commutation (38c) contrôlable en fonction d'un troisième seuil du courant (Is), les circuits de seuil (35a, 35b, 35c) étant conçus de telle sorte que, lorsque le premier, le deuxième et/ou le troisième seuil est atteint, le courant (Is) est limité au premier, au deuxième et/ou au troisième seuil, et le troisième circuit de seuil (35a, 35b) étant également monté en parallèle avec le régulateur de tension (36) introduit dans le trajet de courant (50).

3. Appareil de terrain à sécurité intrinsèque de la technique d'automatisation selon la revendication 1 ou 2, pour lequel le premier, le deuxième et/ou le troisième seuil du courant (Is) est/sont supérieur(s) à 22 mA, se situe(nt) notamment dans la gamme de 32 à 40 mA.

4. Appareil de terrain à sécurité intrinsèque de la technique d'automatisation selon l'une ou plusieurs des revendications précédentes, pour lequel le premier, le deuxième et/ou le troisième circuit de seuil sont conçus de telle sorte qu'au moins deux des trois seuils, de préférence tous, sont sensiblement égaux.

5. Appareil de terrain à sécurité intrinsèque de la technique d'automatisation selon l'une des revendications 1 à 3, pour lequel le premier, le deuxième et/ou le troisième circuit de seuil est conçu de telle sorte qu'au moins deux des trois seuils du courant (Is) sont différents l'un de l'autre.

6. Appareil de terrain à sécurité intrinsèque de la technique d'automatisation selon l'une ou plusieurs des revendications précédentes, pour lequel les éléments de commutation (38a, 38b, 38c) contrôlables activement présentent un élément de commutation à semi-conducteur ou un transistor.

7. Appareil de terrain à sécurité intrinsèque de la technique d'automatisation selon l'une ou plusieurs des revendications précédentes, pour lequel les circuits de seuil (35a, 35b, 35c) comprennent chacun au moins deux transistors.

8. Appareil de terrain à sécurité intrinsèque de la technique d'automatisation selon l'une ou plusieurs des revendications précédentes, pour lequel l'électronique d'appareil de terrain présente en outre une résistance de shunt (33), laquelle est introduite en série avec le régulateur de tension (36) dans le trajet de courant (50) et l'électronique d'appareil de terrain (31, 32, 33, 34, 36) est en outre conçue pour lire en retour le courant (Is) par l'intermédiaire de la résistance de shunt (33) et le premier, le deuxième et/ou le troisième circuit de seuil (35a, 35b) réalisant l'atteinte du premier, du deuxième et/ou du troisième seuil du courant (Is) par au moins une prise de tension aux bornes de la résistance de shunt (33).

9. Appareil de terrain à sécurité intrinsèque de la technique d'automatisation selon au moins la revendication précédente, pour lequel au moins un, de préférence tous les circuits de seuil, comprennent respectivement au moins deux transistors, et les au moins deux transistors étant respectivement reliés entre eux et à l'élément de commutation (38a, 38b, 38c) respectif, contrôlable activement, ainsi qu'à la résistance de shunt (33), de telle sorte que le seuil de commutation respectif est pour l'essentiel déterminé par la résistance de shunt (33).

10. Appareil de terrain à sécurité intrinsèque de la technique d'automatisation selon au moins l'une des revendications précédentes, pour lequel au moins l'un, de préférence tous les circuits de seuil (35a, 35b, 35c), comprennent chacun au moins un comparateur (39a, 39b, 39c), un transistor et un diviseur de tension (40), lesquels sont reliés entre eux et à l'élément de commutation (38a, 38b, 38c) respectif, contrôlable activement, de telle sorte que le seuil de commutation respectif est déterminé pour l'essentiel par le diviseur de tension (40).
